# EUROPEAN PATENT APPLICATION

(11) **EP 2 762 228 A1**
(43) Date of publication of application: **06.08.2014**
(21) Application number: 13382035.7
(22) Date of filing: 05.02.2013
(51) Int. Cl.: B01J 20/22, B01J 20/28, C01B 3/00, C07F 15/06

(54) **Ultraporous metal organic framework materials and method for their production**

(71) Applicant: Universidad del Pais Vasco, 48940 Leioa Vizcaya (ES)
(72) Inventor: Castillo García, Oscar, 48940 Leioa, Vizcaya (ES); Beobide Pacheco, Garikoitz, 48940 Leioa, Vizcaya (ES); Lanchas González, Mónica, 48940 Leioa, Vizcaya (ES); Luque Arrebola, Antonio, 48940 Leioa, Vizcaya (ES); Román Polo, Pascual, 48940 Leioa, Vizcaya (ES); Pérez Yáñez, Sonia, 48940 Leioa, Vizcaya (ES)
(74) Representative: ABG Patentes, S.L.

(57) **Abstract**

The present invention refers to new ultraporous metal-organic framework materials with increased surface area, a process for its preparation using an aqueous microemulsion of alkylamines, as well as its use as adsorbent, desiccant, flame retardant, storage material, gas purificator, selective capturer, drug delivery material, depot material for active substances or catalysts.

## Description

### FIELD OF THE INVENTION

The present invention relates to novel ultraporous metal-organic framework materials, a process for preparing thereof and their use as adsorbents, desiccants, flame retardants, storage materials or depot materials for active substances or catalysts.

### BACKGROUND

Ultraporous materials (defined as those with surface area above 3000 m²/g) are of general interest in industrial applications such as gas storage, capture and separation, selective catalysis (size/shape), drug storage and delivery and sensoring. Emerging areas such as the CO₂ capture and valorisation, H₂ and light hydrocarbons storage at mild conditions (pressure and temperature) require the continuous development of new materials with high performance and competitive prices. For instance, nowadays the CO₂ capture is highly demanded for integrated gasification combined cycle centrals (IGCC) and for the purification of the H₂ stream produced by means of the gasification of the biomass or fuels. Related with the latter issue, the removal of poisoning impurities such as CO from the H₂ source is crucial in the fields of catalytic hydrogenation and H₂ fuel-cells. Other relevant aspects concerning the Kyoto requirements are the development of zero-emission hydrogen vehicles and the greenhouse or CFCs gases capture from the industrial emissions.

MOFs (Metal-Organic Frameworks) stand out among the different porous materials because they hold the current surface area record (-7200 m²/g, approximately the surface area of one and a half football fields) with a large difference over zeolites or activated carbon [O. K. Farha et al., JACS, 2012, 134, 15016].

Even though the most widely used materials up until today have been zeolites or activated carbon due to their low cost and to the long-standing tradition of using them, new technological needs require more efficient materials. In this aspect, state-of-the-art technological prototypes incorporating these MOFs materials as the core of their operation are emerging today. To mention a unique example, Mercedes-Benz has created a car prototype (F125) equipped with a tank filled with MOFs for storing H₂ (ca. 7.5 kg) necessary for engine operation. Around the same time, BASF has demonstrated an endurance of 45,000 km for a light-weight vehicle prototype equipped with a fuel tank filled with MOFs for storing methane as fuel. On the other hand, MOFs have demonstrated an exceptional applicability for CO₂ capture and sequestration (CCS) technologies, where CO₂ capture in porous materials has greater energy efficiency compared with the methods existing up until now [K. Sumida et al., Chem. Rev. 2012, 112, 724].

MOFs are considered to be porous coordination polymers consisting of a combination of metal ions as nodes and organic bridging ligands as connectors that extends into the three dimensions.

Despite such high surface area values, ultraporous MOFs suffer a series of drawbacks for their industrial-scale production and application:
1. The molecules binding the metallic cores to one another and therefore providing cohesion to the three-dimensional framework are complex, difficult to produce and therefore costly.
2. Complex synthesis making the production thereof more expensive (solvothermal conditions requiring leak-tight reactors that withstand high temperature and pressure, as well as hazardous organic solvents such as DMF, DEF... which furthermore partially decompose during synthesis, making reusing them difficult).
3. Activating the material, i.e., removing the molecules present in the pores, is complex and these ultraporous materials usually require the use of supercritical drying conditions with CO₂, which adds additional complexity to the process and makes it more expensive.

Different attempts have been made to modify or improve the porosity of MOFs. Today, only a few of these attempts are based on the template effect, a well-known synthesis concept which allows introducing mesoporosity into a material.

For instance, endotemplate pathways are utilized in the synthesis of mesoporous silica phases (MCMs, SBAs...), while exotemplates are employed for mesoporous carbons (CMKs, KITs...) and for other ceramics.

The incorporation of micelles during the material forming process is a method that results in new pores after removing the molecules present in these micelles. Only very recently a few examples that extrapolate this methodology to the synthesis of MOFs have began to emerge [K. M. Choi et al., J. Am. Chem. Soc., 2011, 133, 11920; L. G. Qiu et al., Angew. Chem., Int. Ed., 2008, 47, 9487; J. Górka et al., Chem. Commun., 2010, 46, 6798; X. D. Do et al., Microporous Mesoporous Mater., 2011, 141, 135; X. Roy and M. J. MacLachlan, Chem. Eur. J., 2009, 15, 6552]. However, all these attempts use surfactants with long aliphatic chains which put the resulting micelles, and therefore the pores they generate, within the mesoporous range (> 2 nm), thus lowering the contribution of the microporosity to the total porosity with respect to the starting material and decreasing the accessible total surface area.

There is a publication [S. Pérez-Yañez et al., Chem. Commun., 2012, 48, 907] where butanoic acid has been used as a surfactant for obtaining small micelles with a diameter less than 2 nm which have enabled converting a barely porous material (210 m²/g) into a moderately porous material (428 m²/g). This method is limited to the compound in question because butanoic acid is one of the components of the actual MOF so it can be readily incorporated into the synthesis process. In other cases, this method is unworkable since the presence of the acid prevents or hinders the necessary deprotonation of the connecting molecule so that said molecule can bind the metallic cores.

In view of the disadvantages conferred by the currently available ultraporous metal organic frameworks materials and the processes for their preparation, it is desirable to develop new ultraporous materials with improved properties, in particular improved porosity, which try to solve the problems mentioned above, and which can be produced by means of a cost-effective procedure.

### BRIEF DESCRIPTION OF THE INVENTION

The authors of the present invention have developed a new process for the preparation of ultraporous metal-organic framework materials with an increased porosity and a surface area higher than 3000 m²/g, based on the use of aqueous synthetic routes and cheap building blocks with synthesis temperatures ranging from 0 to 80°C, thus providing a procedure economically advantageous, which can be applied at industrial scale.

The key factor for the success of the process of the invention is the use of small alkylamines surfactant molecules that provide stable microemulsions containing micelles when mixed with the water. The incorporation of micelles of alkylamines during the synthesis of the metal-organic framework material provides it with additional pores to those presented by the material synthesized in the absence of said alkylamines. In particular, these additional pores have diameters ranging from 0.5 to 4 nm.

Moreover, the incorporation of said alkylamines increases the BET surface area between 1.5 to 5 times the maximum reported value for a material synthesized in the absence of said alkylamines, as well as the theoretical surface area based on the crystal structure of the material, in contrast to the state of the art wherein the incorporation of micelles leads to the loss of surface area.

As a consequence of that, the total pore volume of the material is also increased, thus improving the properties of these framework materials to be used in many applications, for example, as adsorbents, desiccants, flame retardants, storage materials or depot materials for active substances or catalysts.

Therefore, a first aspect of the present invention refers to a metal-organic framework material having micropores with diameters of less than 2 nm, said material comprising repeating units comprising a metal ion and an organic linking moiety, **characterized in that** said material further comprises micelles of alkylamines homogeneously distributed within the framework material, wherein said alkylamines have the general formula (I): 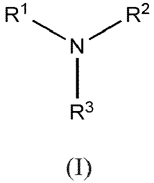 wherein:
R¹ is a substituted or unsubstituted, linear or branched, alkyl radical having from 4 to 12 carbon atoms; and
R² and R³ are each independently a hydrogen atom or a linear or branched alkyl radical having from 1 to 12 carbon atoms.

In another aspect, the invention relates to an ultraporous metal-organic framework material having a BET surface area higher than 3000 m²/g and micropores with diameters of less than 2 nm, said material comprising repeating units comprising a metal ion and an organic linking moiety, **characterized in that** said material comprises additional pores interpenetrated and homogeneously distributed within the framework material, wherein said additional pores have a diameter from 0.5 to 4 nm.

Another aspect of the present invention refers to a process for the preparation of a metal-organic framework material as defined above, said process comprising:
a) preparing an aqueous microemulsion comprising an alkylamine of formula (I): 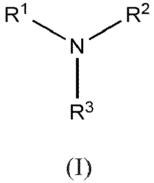 wherein:
   R¹ is a substituted or unsubstituted alkyl radical having from 4 to 12 carbon atoms; and
   R² and R³ are each independently a hydrogen atom or an alkyl radical having from 1 to 12 carbon atoms.
b) preparing an aqueous solution comprising a precursor of a metal ion and an organic compound capable of coordinating to metal ions; and
c) mixing the aqueous microemulsion obtained in step a) and the aqueous solution obtained in step b), thus forming a precipitate.

In a particular embodiment, said process further comprises a step wherein the precipitate obtained in step c) is subjected to a heating process at a temperature ranging from 50 to 250°C during at least 1 hour, more preferably under vacuum conditions.

Another aspect of the present invention relates to an ultraporous metal-organic framework material obtainable by the process as defined above.

Finally, another aspect of the invention relates to the use of an ultraporous metal-organic framework material as defined above as adsorbent, desiccant, flame retardant, storage material or depot material for active substances or catalysts.

### DETAILED DESCRIPTION OF THE INVENTION

As used herein and in the appended claims, the singular forms "a," and "the" include plural referents unless the context clearly dictates otherwise. Thus, for example, reference to "a pore" includes a plurality of such pore and reference to "the metal" includes reference to one or more metals known to those skilled in the art, and so forth.

Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices and materials are described herein.

In the context of the present invention, the term "metal-organic framework" should be understood as a structure having repeating units comprising a metal ion and an organic linking moiety that extends into three dimensions. Therefore, a plurality of said units linked together defines the framework wherein the metal ion and the organic linking moiety are coordinatively bound.

Other terms usually employed in the scientific terminology to name metal-organic frameworks are: porous coordinated polymers, open-framework coordination polymers or complexes.

A first aspect of the present invention refers to a metal-organic framework material having micropores with diameters of less than 2 nm, said material comprising repeating units comprising a metal ion and an organic linking moiety, **characterized in that** said material further comprises micelles of alkylamines homogeneously distributed within the framework material, wherein said alkylamines have the general formula (I): 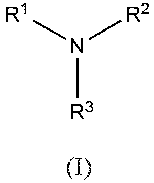 wherein:
R¹ is a substituted or unsubstituted, linear or branched, alkyl radical having from 4 to 12 carbon atoms; and
R² and R³ are each independently a hydrogen atom or a linear or branched alkyl radical having from 1 to 12 carbon atoms.

The metal-organic framework of the present invention contains micropores which, for the present purposes, are pores having a diameter of 2 nm or below, in accordance with the definition in Pure Appl. Chem., 1976, 45, 71-79.

The presence of micropores can be seen from the sorption measurements for determining the nitrogen uptake capacity of the metal-organic framework material at 77K. Hence, the typical isotherm having the type I shape indicates the presence of micropores.

As the metal component within the framework material, particularly to be mentioned are metal ions of elements of the following group: Sc, Ti, V, Cr, Mn, Fe, Co, Ni, Cu, Zn, Y, Zr, Nb, Mo, Tc, Ru, Rh, Pd, Ag, Cd, Lu, Hf, Ta, W, Re, Os, Ir, Pt, Au, Hg, Al, Be, more preferably Zn, Fe, Mn, Cu, Ni, Al, Be or Co, even more preferably Zn or Co.

As metal ions of these elements, particularly to be mentioned are: Sc³⁺, Ti⁴⁺, V⁵⁺, V⁴⁺, V³⁺, V²⁺, Cr³⁺, Mn³⁺ Mn²⁺, Fe³⁺, Fe²⁺, Co³⁺, Co²⁺, Ni³⁺, Ni²⁺, Cu²⁺, Cu⁺, Zn²⁺ Y³⁺, Zr⁴⁺ Nb³⁺, Mo³⁺, Ru³⁺, Ru²⁺, Rh²⁺, Rh⁺, Pd²⁺, Pd⁺ Ag⁺, Cd²⁺, Hf⁴⁺, Ta³⁺, W³⁺, Re³⁺, Re²⁺, Os³⁺, Os²⁺, Ir²⁺, Ir⁺, Pt²⁺, Pt⁺, Au⁺, Hg²⁺, Al³⁺, Be²⁻.

As for the organic linking moiety, an at least bidentate organic compound is used which is capable to coordinate with the metal ion. In principle, all organic compounds which are suitable for this purpose and which fulfil the above requirement of being at least bidentate may be used. This at least bidentate compound has at least two centres which are capable to form at least two coordinate bonds to a given metal ion and/or one coordinate bond to each of two or more, preferably two, metal ions, particularly to the metal ions of the aforementioned metals.

In a preferred embodiment, the bidentate organic compound is a heteroaromatic compound having at least two nitrogen atoms. The heteroaromatic compound can have one or more rings, for example, two, three, four or five rings, with the rings being able to be present separately from one another and/or at least two rings being able to be present in fused form.

As mentioned above, the heteroaromatic compound has at least two nitrogen atoms which can be in the same or different ring. Preference is given to the at least two nitrogen atoms being present in the same ring of the heteroaromatic compound.

Preferably, the heteroaromatic compound has one or two fused rings, being particularly preferred 5- or 6-membered rings.

The heteroaromatic compound has a nitrogen atom from which a hydrogen has been eliminated. This forms a negative charge which can at least partially compensate the positive charge of the metal ion.

Said heteroaromatic compound is unsubstituted or has one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano or nitro.

For the purpose of the present invention, the term "C₁₋₆ alkyl" refers to a linear or branched alkyl group having from 1 to 6 carbon atoms. Examples are methyl, ethyl, n-propyl, i-propyl, n-butyl, i-butyl, sec-butyl, t-butyl, n-pentyl, n-hexyl. Preferred radical are methyl or ethyl.

Furthermore, the term "halogen" refers to fluorine, chlorine, bromine or iodine. Preference is given to fluorine or chlorine.

Preferred substituents of the heteroaromatic compound are -C₁₋₆ alkyl, -NH₂ and -OH. Further preference is given to -C₁₋₆ alkyl and -NH₂. Particular preference is given to -C₁₋₆ alkyl.

In a further preferred embodiment, the heteroaromatic compound is selected from the group consisting of: 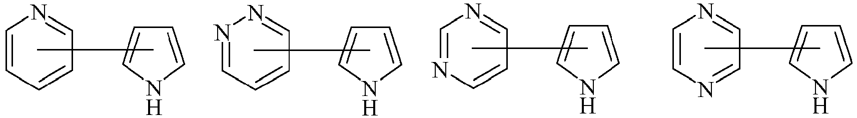 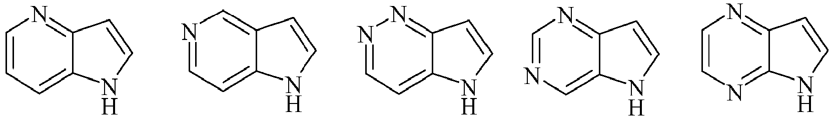 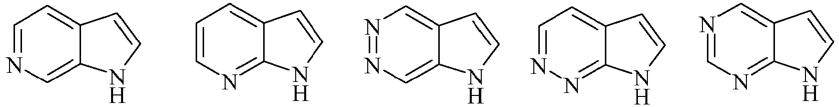 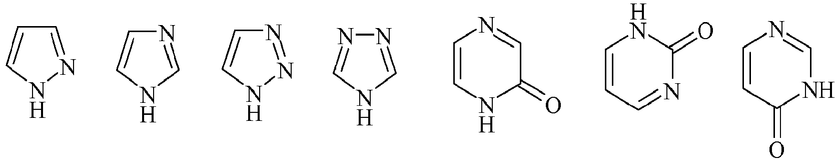 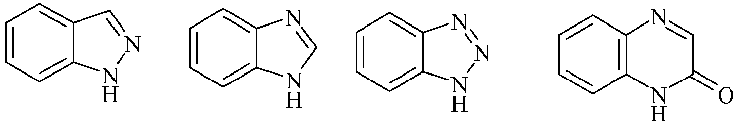 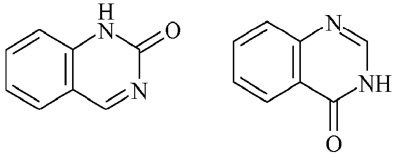 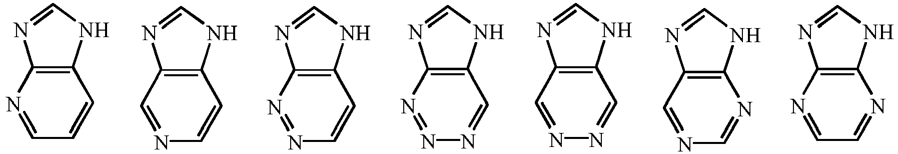 and combinations thereof,
wherein, these preferred heteroaromatic compounds can also be unsubstituted or can have one or more substituents independently selected from -C₁₋₆ alkyl, -NH₂, -NH(C₁₋₆ alkyl), -N(C₁₋₆ alkyl)₂, -OH, -O-C₁₋₆ alkyl, halogen, cyano or nitro.

In a more preferred embodiment, the heteroaromatic compound is selected from the group consisting of: 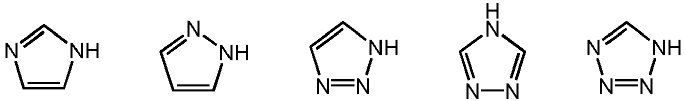 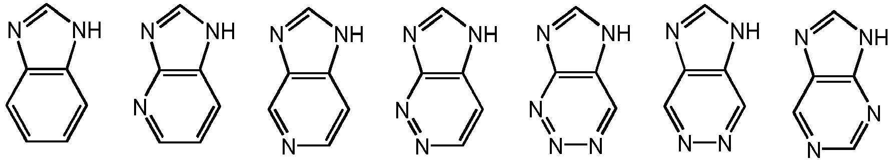 and combinations thereof,
wherein, these preferred heteroaromatic compounds can also be unsubstituted or can have one or more substituents independently selected from -C₁₋₆ alkyl, -NH₂, -NH(C₁₋₆ alkyl), -N(C₁₋₆ alkyl)₂, -OH, -O-C₁₋₆ alkyl, halogen, cyano or nitro.

Preferred substituents of the heteroaromatic compound are -C₁₋₆ alkyl, -NH₂ and -OH. Further preference is given to -C₁₋₆ alkyl and -NH₂. Particular preference is given to -C₁₋₆ alkyl.

In an even more preferred embodiment, the heteroaromatic compound is an imidazole optionally substituted with one or more substituents independently selected from -C₁₋₆ alkyl, -NH₂, -NH(C₁₋₆ alkyl), -N(C₁₋₆ alkyl)₂, -OH, -O-C₁₋₆ alkyl, halogen, cyano or nitro. Preferred substituents of the imidazole are -C₁₋₆ alkyl, -NH₂ and -OH. Further preference is given to -C₁₋₆ alkyl and -NH₂. Particular preference is given to -C₁₋₆ alkyl.

In another preferred embodiment, the metal-organic framework material comprises repeating units comprising a zinc or cobalt ion and 2-methylimidazole.

The micropore size of the metal-organic framework can be controlled by selection of the suitable organic ligand. In general, the larger the organic compound, the larger the pore size. The micropore size is less than 2 nm, preferably from 0.1 to less than 2 nm, based on the crystalline material.

By the term "micelle of alkylamines" should be understood an aggregate of alkylamines dispersed in aqueous solution, wherein the hydrophilic part of the alkyl amine (amine group) is in contact with the surrounding water, sequestering the hydrophobic tail regions (alkyl groups) in the centre of the aggregate.

These micelles are homogeneously distributed within the framework material.

In a preferred embodiment, R¹ is an unsubstituted linear alkyl radical having from 4 to 8 carbon atoms, such as, butyl, pentyl, hexyl, heptyl or octyl.

In another preferred embodiment, at least one of R² and R³ is hydrogen, even more preferably both R² and R³ are hydrogen.

In a preferred embodiment, the alkylamine of formula (I) is a monoalkylamine of formula NH₂R¹, wherein R¹ is an unsubstituted linear alkyl radical having from 4 to 8 carbon atoms.

In another aspect, the invention relates to an ultraporous metal-organic framework material having a BET surface area higher than 3000 m²/g and micropores with diameters of less than 2 nm, said material comprising repeating units comprising a metal ion and an organic linking moiety, **characterized in that** said material comprises additional pores interpenetrated and homogeneously distributed within the framework material, wherein said additional pores have a diameter from 0.5 to 4 nm.

This ultraporous metal-organic framework material results from the removal of the micelles of alkylamines from the metal-organic framework material defined as first aspect of the invention.

In addition to the micropores present in the framework material of the first aspect, the ultraporous metal-organic framework of the invention has other pores interpenetrated and homogeneously distributed within the framework material, having a diameter from 0.5 to 4 nm, preferably from 0.5 to 3 nm, even more preferably from 0.5 to 2.5 nm, in particular from 0.5 to 2.0 nm.

The term "ultraporous" refers to a material having a BET surface area higher than 3000 m²/g.

The calculated specific surface areas according to Brunauer-Emmett-Teller model (DIN 66131) are above 3000 m²/g, in particular above 3500 m²/g, more particular above 4000 m²/g, even more particular above 5000 m²/g.

### Process

The process for the preparation of the metal-organic framework material of the invention comprises:
a) preparing an aqueous microemulsion comprising an alkylamine of formula (I): 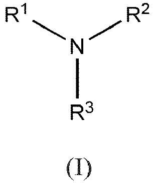 wherein:
   R¹ is a substituted or unsubstituted, linear or branched, alkyl radical having from 4 to 12 carbon atoms; and
   R² and R³ are each independently a hydrogen atom or a linear or branched alkyl radical having from 1 to 12 carbon atoms.
b) preparing an aqueous solution comprising a precursor of a metal ion and an organic compound capable of coordinating to metal ions; and
c) mixing the aqueous microemulsion obtained in step a) and the aqueous solution obtained in step b), thus forming a precipitate.

In step a) of the process of the invention, a microemulsion comprising an alkylamine of formula (I) is prepared. Said microemulsion can be prepared by adding to an aqueous solvent an alkylamine of formula (I), this alkylamine acting as surfactant.

For the purpose of the present invention, an aqueous solvent means water or a mixture comprising at least 40% by weight of water, preferably at least 50% by weight, more preferably more than 50% by weight, based on the total amount of solvent. This aqueous solution is preferably a solution containing 100% of water as solvent.

In a preferred embodiment, R¹ in the alkylamine of formula (I) is an unsubstituted linear alkyl radical having from 4 to 8 carbon atoms, such as, butyl, pentyl, hexyl, heptyl or octyl.

In another preferred embodiment, at least one of R² and R³ in the alkylamine of formula (I) is hydrogen, even more preferably both R² and R³ are hydrogen.

In a preferred embodiment, the alkylamine of formula (I) is a monoalkylamine of formula NH₂R¹, wherein R¹ is an unsubstituted linear alkyl radical having from 4 to 8 carbon atoms.

This step a) provides a microemulsion comprising micelles of alkylamines dispersed in the aqueous solution, being the hydrophilic part of the alkyl amine (amine group) in contact with the surrounding water, sequestering the hydrophobic tail regions (alkyl groups) in the centre of the micelle.

In step b) of the process of the invention, an aqueous solution comprising a precursor of the metal ion and an organic compound capable of coordinating to metal ions is prepared.

The solvent used in step b) is water or a mixture comprising at least 40% by weight of water, preferably at least 50% by weight, more preferably more than 50% by weight, based on the total amount of solvent. This aqueous solution is preferably a solution containing 100% of water as solvent.

In a particular embodiment, when a mixture comprising at least 40% by weight of water is used, the other component is a solvent having unlimited miscibility with water, e.g. an alcohol.

The precursor of the metal ion is preferably an inorganic salt, an oxide, a hydroxide, the salt of an inorganic oxygen-containing acid, an organic salt, optionally in the form of a hydrate or a mixture thereof. As a precursor of the metal ion, the metal in its elemental form can also be used.

Preferred inorganic salts are halides and sulphides.

A halide is, for example, chloride, bromide or iodide. Preferably is chloride.

An inorganic oxygen-containing acid is, for example, sulphuric acid, sulphurous acid, phosphoric acid, perchloric acid or nitric acid.

An organic salt is preferably an acetate, acetylacetonate, citrate or oxalate.

The organic compound capable of coordinating to metal ions is the compound providing the organic linking moiety to the framework material.

This organic compound is a at least bidentate organic compound which is capable to coordinate with the metal ion. In principle, all organic compounds which are suitable for this purpose and which fulfil the above requirement of being at least bidentate may be used. This at least bidentate compound has at least two centres which are capable to form at least two coordination bonds to a given metal ion and/or one coordination bond to each of two or more, preferably two, metal ions, particularly to the metal ions of the aforementioned metals.

In a preferred embodiment, the bidentate organic compound is a heteroaromatic compound having at least two nitrogen atoms. The heteroaromatic compound can have one or more rings, for example, two, three, four or five rings, with the rings being able to be present separately from one another and/or at least two rings being able to be present in fused form.

As mentioned above, the heteroaromatic compound has at least two nitrogen atoms which can be in the same or different ring. Preference is given to the at least two nitrogen atoms being present in the same ring of the heteroaromatic compound.

Preferably, the heteroaromatic compound has one or two fused rings, being particularly preferred 5- or 6-membered rings.

The heteroaromatic compound has a nitrogen atom from which a hydrogen has been eliminated. This forms a negative charge which can at least partially compensate the positive charge of the metal ion.

Said aromatic compound is unsubstituted or has one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano or nitro.

For the purpose of the present invention, the term "C₁₋₆ alkyl" refers to a linear or branched alkyl group having from 1 to 6 carbon atoms. Examples are methyl, ethyl, n-propyl, i-propyl, n-butyl, i-butyl, sec-butyl, t-butyl, n-pentyl, n-hexyl. Preferred radicals are methyl or ethyl.

Furthermore, the term "halogen" refers to fluorine, chlorine, bromine or iodine. Preference is given to fluorine or chlorine.

Preferred substituents of the heteroaromatic compound are -C₁₋₆ alkyl, -NH₂ and -OH. Further preference is given to -C₁₋₆ alkyl and -NH₂. Particular preference is given to -C₁₋₆ alkyl.

In a further preferred embodiment, the heteroaromatic compound is selected from the group consisting of: 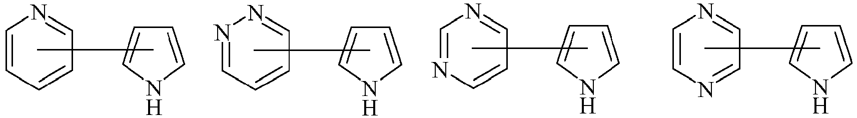 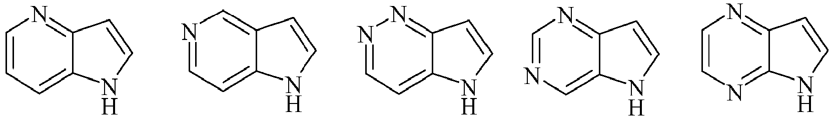 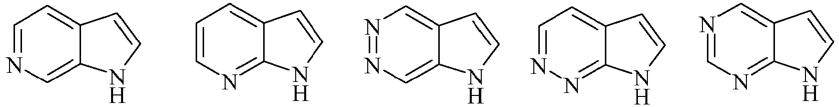 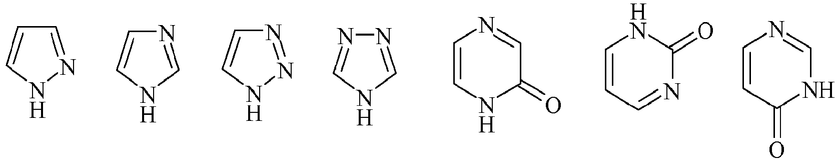 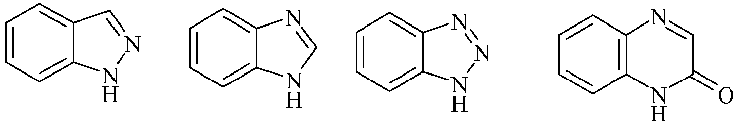 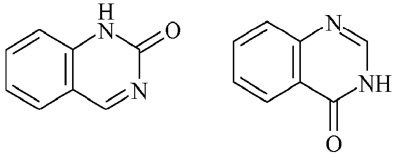 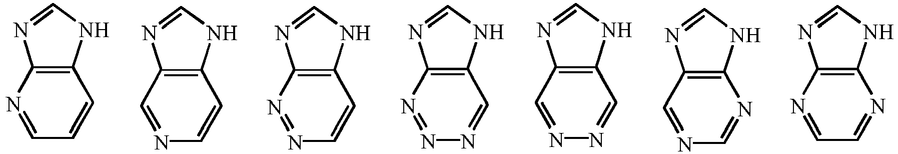 and combinations thereof,
wherein, these preferred heteroaromatic compounds can also be unsubstituted or can have one or more substituents independently selected from C₁₋₆ alkyl, -NH₂, NH(C₁₋₆ alkyl), N(C₁₋₆ alkyl)₂, OH, =O, O-C₁₋₆ alkyl, halogen, cyano or nitro.

In a more preferred embodiment, the heteroaromatic compound is selected from the group consisting of: 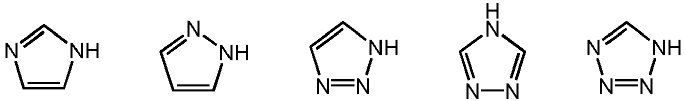 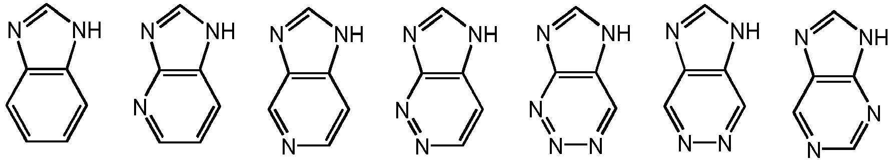 and combinations thereof,
wherein, these preferred heteroaromatic compounds can also be unsubstituted or can have one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano or nitro.

Preferred substituents of the heteroaromatic compound are -C₁₋₆ alkyl, -NH₂ and -OH. Further preference is given to -C₁₋₆ alkyl and -NH₂. Particular preference is given to -C₁-₆ alkyl.

In an even more preferred embodiment, the heteroaromatic compound is an imidazole optionally substituted with one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano or nitro. Preferred substituents of the imidazole are -C₁₋₆ alkyl, -NH₂ and -OH. Further preference is given to -C₁₋₆ alkyl and -NH₂. Particular preference is given to -C₁₋₆ alkyl.

The molar ratio of the precursor of the metal ion to organic compound in the aqueous solution of step b) is preferably in the range from 1:5 to 1:1. More preference is given to a range from 1:4 to 1:1.2, more preferably from 1:3 to 1:1.5, even more preferably from 1:2.5 to 1:1.75, in particular 1:2.

In order to obtain a framework material in which the metal ion and the organic compound are coordinately bound, the organic compound must be deprotonated to coordinate metal centre. Accordingly, the reaction of the metal precursor and the organic compound in the aqueous solution to form the metal-organic framework material requires the presence of a base.

In the process of the invention, the alkylamines of formula (I) comprised in the microemulsion obtained in step a) provide the required base in the form of small micelles for the reaction to take place. Therefore, in step c) the aqueous solution prepared in step b) is mixed with the microemulsion prepared in step a). This mixing step can be carried out by conventional methods. For example, by stirring, shaking, circulation or pumpled circulation. In a preferred embodiment, the referred mixture is effected by stirring during at least one hour.

The molar proportion of alkylamines of formula (I) to metal ion after the mixture step is preferably in the range from 2:1 to 100:1. More preference is given in the range from 2:1 to 30:1, even more preferably from 5:1 to 20:1.

In a particular embodiment, the mixture is carried out at a temperature in the range from 0°C to 80°C, more preferably from 2°C to 30°C, even more preferably at about 4°C.

The reaction between the metal precursor and the organic compound takes place at atmospheric pressure. However, slightly superatmospheric or subatmospheric pressures can occur due to the apparatus where the reaction takes place.

The ability of the alkylamines to coordinate the metal centre also ensures the encapsulation of the micelles of alkylamines during the coordination polymer grow process, as they are prone to behave as nucleating centre.

Upon mixture of the microemulsion of alkylamines and the aqueous solution of step b), there is provided a suspension containing a precipitate consisting of a metal-organic framework material having micropores with diameters of less than 2 nm, and comprising repeating units comprising a metal ion and an organic linking moiety, wherein said framework material also contains micelles of alkylamines of formula (I) homogeneously distributed therein.

Step c) is preferably followed by isolation of the metal-organic framework formed. This step is effected by conventional techniques, such as solid-liquid separations, centrifugation, extraction, filtration, membrane filtration, cross-flow filtration, flocculation using flocculation adjuvants (non-ionic, cationic and anionic adjuvants), by flotation, spray-drying or spray granulation. The isolation step is preferably carried out by filtration with optional subsequent washing.

The metal-organic framework material obtained can be subjected to drying. Spray drying is also possible.

Accordingly, in a particular embodiment, the isolation process is followed by a drying step. Said step is preferably carried out at room temperature.

In a further aspect, the present invention refers to a metal-organic framework material obtainable by a process as defined above.

The synthesis of metal-organic framework materials in a microemulsion of alkylamines of formula (I) in an aqueous solution results in the incorporation of alkylamine micelles which can subsequently be removed by heating, more preferably under vacuum, generating new pores inside the material.

Therefore, in a particular embodiment, the process of the invention further comprises a step wherein the metal-organic framework material obtained following the process described above is subjected to a heating process at a temperature ranging from 50 to 250°C during at least 1 hour. This step causes the activation of the framework material by removing the micelles of alkylamines.

The activation process can be speeded up applying vacuum. Alternative activation processes such as solvent exchange and supercritical drying can be also applied.

The incorporation of micelles of alkylamines of formula (I) during the synthesis of the metal-organic framework material and its subsequent activation, provides additional pores to those presented by the material synthesized in the absence of alkylamines of formula (I), with diameters ranging from 0.5 nm to 4 nm, more preferably from 0.5 to 3 nm, even more preferably between 0.5 and 2.5 nm, in particular between 0.5 and 2.0 nm.

Furthermore, the incorporation of micelles of alkylamines of formula (I) during the synthesis, and its subsequent activation, also increases the BET surface area of the metal-organic framework material between 1.5 to 5 times the maximum reported value for a material synthesized in the absence of said alkylamines, as well as the theoretical surface area based on the crystal structure of the material. In particular with values higher than 3000 m²/g, more particularly a surface area comprised between 3200-5600 m²/g.

Accordingly, this step yields an ultraporous metal-organic framework material having a BET surface area higher than 3.000 m²/g and micropores with diameters of less than 2 nm, with additional interpenetrated pores homogeneously distributed within the framework material having a diameter from 0.5 to 4 nm.

As a consequence of that, the total pore volume of the material is also increased, thus improving the properties of these framework materials to be used in many applications.

The synthesis methodology using the microemulsion of alkylamines also allows controlling the added porosity through the micelle concentration of the reaction medium as well as the dimensions of the new pores incorporated in this case through the length of the corresponding amine.

All these compounds show additional mass loss stage or stages, belonging to the release of the corresponding alkylamines of formula (I), below 300°C compared to the material synthesized in absence of said alkylamines.

Thus, this method provides a way to surpass the limits imposed by the crystal structure of the coordination polymers obtained in absence of the alkylamines of formula (I).

With this method, it is provided a qualitative breakthrough in the strategy of introducing additional porosity, allowing it to be of more general application to other porous coordination polymers.

It must be emphasized that these new ultraporous materials are obtained at a low cost in terms of both the raw materials and the production and activation methods. Likewise, the alkylamines used as surfactants are susceptible to recovery and reuse, an aspect which would lead to a further reduction in their production cost.

Therefore, a further aspect of the present invention refers to an ultraporous metal-organic framework material obtainable by the process as described above, wherein said process includes the activation step already mentioned.

The ultraporous metal-organic framework material of the present invention may be compounded, extruded, co-extruded, pressed, spinned, foamed and granulated according to processes known by a skilled person.

Depending on the application, the ultraporous metal-organic framework material of the present invention can be used in powder form or shape into extrudates, pellets, granules, rings, films, etc., or can be applied to supports, for instance as coatings on distillation packing or honeycombs and knitted meshes made of metal or polymers. Furthermore, the above methods allow preparing various further and different geometries and shapes, which are necessary for the widespread application areas of said materials. The reactions can, depending on the application, be carried out in a liquid, gaseous or supercritical phase.

As a result of the high surface area of the ultraporous metal-organic framework material of the invention and its porosity, it can be used as adsorbent, desiccant, flame retardant, storage materials and depot materials for sustained release of active ingredients.

Furthermore, these materials can, owing to their high porosity and surface area, be used as sensors or in sensors for, for example, gas detection or in application areas such as "chemistry on a chip"

The metal-organic framework material can also be employed in or as electronic component or functional material.

In a preferred embodiment, the metal-organic framework material of the invention is used as gas storage material and/or gas release material. As the gases to be storage and/or released, particularly mentioned are hydrocarbons, alcohols, hydrogen, nitrogen, noble gases, CO, CO₂, natural gases, synthesis gas, compounds generating and/or delivering these gases and mixtures of two or more thereof. Particularly preferred are hydrogen, a hydrogen containing gas mixture, a hydrogen generating or delivering substance, a gas mixture comprising at least one hydrogen generating and/or delivering substance.

### EXAMPLES

### Example 1. Preparation of Co₁(2-methylimidazolate)₂(n-pentylamine)_{0.48}(H₂O)_{0.33}

A mixture of 20 mL of water and 5.9 mL (50 mmol) of n-pentylamine was stirred for several minutes. The solution was mixed under vigorous stirring with an aqueous solution (30 mL) containing 1.188 g (4.0 mmol) of Co(NO₃)₂ and 0.663 g (8.0 mmol) of 2-methylimidazole. The reaction mixture was left stirring for one hour at 4°C. Thereafter, the precipitate was filtered out, thoroughly washed with water and allowed to dry at room temperature. Prior to gas adsorption measurements the material was activated at 150 °C during 12 h under an applied vacuum of 10⁻⁵ atm. In order to analyze the permanent porosity of the material N₂ adsorption isotherms were collected at 77 K. The surface area of the material was 3582 m²/g according to the BET analysis of the N₂ isotherm. T-plot analysis yielded micropore surface area of 3425 m²/g, mesopore (external) surface area of 157 m²/g and micropore volume of 1.375 cm³/g. The total pore volume of the material estimated at P/P₀ *ca.* 0.96 is 1.535 cm³/g. According to the state of the art, the maximum BET surface area obtained for cobalt(II) 2-methylimidazolates synthesised in absence of alkylamines of general formula (I) is 2070 m²/g, see article: M. Lanchas et al., Chem. Commun. 2012, 48, 9930.

### Example 2. Preparation of Co₁(2-methylimidazolate)₂(n-hexylamine)_{0.44}(H₂O)_{5.21}

A mixture of 10 mL of water and 2.7 mL (20 mmol) of n-hexylamine was stirred for several minutes. The solution was mixed under vigorous stirring with an aqueous solution (30 mL) containing 1.188 g (4.0 mmol) of Co(NO₃)₂ and 0.663 g (8.0 mmol) of 2-methylimidazole. The reaction mixture was left stirring for one hour at 4°C. Thereafter, the precipitate was filtered out, thoroughly washed with water and allowed to dry at room temperature. Prior to gas adsorption measurements the material was activated at 150 °C during 12 h under an applied vacuum of 10⁻⁵ atm. In order to analyze the permanent porosity of the material N₂ adsorption isotherms were collected at 77 K. The surface area of the material was 3222 m²/g according to the BET analysis of the N₂ isotherm. T-plot analysis yielded micropore surface area of 3005 m²/g, mesopore (external) surface area of 216 m²/g and micropore volume of 1.215 cm³/g. The total pore volume of the material estimated at P/P₀ *ca.* 0.96 is 1.370 cm³/g. According to the state of the art, the maximum BET surface area obtained for cobalt(II) 2-methylimidazolates synthesised in absence of alkylamines of general formula (I) is 2070 m²/g, see article: M. Lanchas et al., Chem. Commun. 2012, 48, 9930.

### Example 3. Preparation of Co₁(2-methylimidazolate)₂(n-hexylamine)_{0.55}(H₂O)_{0.35}

A mixture of 10 mL of water and 5.4 mL (40 mmol) of n-hexylamine was stirred for several minutes. The solution was mixed under vigorous stirring with an aqueous solution (30 mL) containing 1.188 g (4.0 mmol) of Co(NO₃)₂ and 0.663 g (8.0 mmol) of 2-methylimidazole. The reaction mixture was left stirring for one hour at 4°C. Thereafter, the precipitate was filtered out, thoroughly washed with water and allowed to dry at room temperature. Prior to gas adsorption measurements the material was activated at 150 °C during 12 h under an applied vacuum of 10⁻⁵ atm. In order to analyze the permanent porosity of the material N₂ adsorption isotherms were collected at 77 K. The surface area of the material was 4650 m²/g according to the BET analysis of the N₂ isotherm. T-plot analysis yielded micropore surface area of 4305 m²/g, mesopore (external) surface area of 344 m²/g and micropore volume of 1.731 cm³/g. The total pore volume of the material estimated at P/P₀ *ca.* 0.96 is 2.132 cm³/g. According to the state of the art, the maximum BET surface area obtained for cobalt(II) 2-methylimidazolates synthesised in absence of alkylamines of general formula (I) is 2070 m²/g, see article: M. Lanchas et al., Chem. Commun. 2012, 48, 9930.

### Example 4. Preparation of Co₁(2-methylimidazolate)₂(n-heptylamine)_{0.55}(H₂O)_{0.35}

A mixture of 20 mL of water and 3.0 mL (20 mmol) of n-heptylamine was stirred for several minutes. The solution was mixed under vigorous stirring with an aqueous solution (30 mL) containing 1.188 g (4.0 mmol) of Co(NO₃)₂ and 0.663 g (8.0 mmol) of 2-methylimidazole. The reaction mixture was left stirring for one hour at 4°C. Thereafter, the precipitate was filtered out, thoroughly washed with water and allowed to dry at room temperature. Prior to gas adsorption measurements the material was activated at 150 °C during 12 h under an applied vacuum of 10⁻⁵ atm. In order to analyze the permanent porosity of the material N₂ adsorption isotherms were collected at 77 K. The surface area of the material was 5591 m²/g according to the BET analysis of the N₂ isotherm. T-plot analysis yielded micropore surface area of 5116 m²/g, mesopore (external) surface area of 474 m²/g and micropore volume of 2.060 cm³/g. The total pore volume of the material estimated at P/P₀ *ca.* 0.96 is 2.690 cm³/g. According to the state of the art, the maximum BET surface area obtained for cobalt(II) 2-methylimidazolates synthesised in absence of alkylamines of general formula (I) is 2070 m²/g, see article: M. Lanchas et al., Chem. Commun. 2012, 48, 9930.

## Claims

1. A metal-organic framework material having micropores with diameters of less than 2 nm, said material comprising repeating units comprising a metal ion and an organic linking moiety, **characterized in that** said material further comprises micelles of alkylamines interpenetrated and homogeneously distributed within the framework material, wherein said alkylamines have the general formula (I): 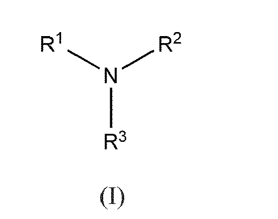 wherein :
R¹ is a substituted or unsubstituted, linear or branched, alkyl radical having from 4 to 12 carbon atoms; and
R² and R³ are each independently a hydrogen atom or a linear or branched alkyl radical having from 1 to 12 carbon atoms.

2. The framework material according to claim 1, wherein the alkylamine of formula (I) is a monoalkylamine of formula NH₂R¹, wherein R¹ is an unsubstituted linear alkyl radical having from 2 to 8 carbon atoms.

3. An ultraporous metal-organic framework material having a BET surface area higher than 3000 m²/g and micropores with diameters of less than 2 nm, said material comprising repeating units comprising a metal ion and an organic linking moiety, **characterized in that** said material comprises additional pores interpenetrated and homogeneously distributed within the framework material, wherein said additional pores have a diameter from 0.5 to 4 nm.

4. The ultraporous framework material according to claim 3, wherein the BET surface area is higher than 4000 m²/g.

5. The ultraporous framework material according to any one of claims 3 and 4, wherein the additional pores have a diameter from 0.5 to 2.5 nm.

6. The framework material according to any one of claims 1 to 5, wherein the metal ion is an ion of an element selected from Zn, Fe, Mn, Cu, Ni, Al, Be or Co.

7. The framework material according to any one of claims 1 to 6, wherein the organic linking moiety is a heteroaromatic compound having at least two nitrogen atoms, wherein said heteroaromatic compound is unsubstituted or has one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano and nitro.

8. A process for the preparation of a metal-organic framework material as defined in any of claims 1 to 7, said process comprising:
a) preparing an aqueous microemulsion comprising an alkylamine of formula (I): 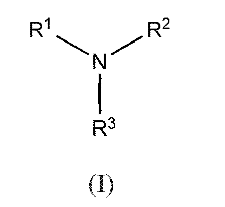 wherein:
R¹ is a substituted or unsubstituted alkyl radical having from 4 to 12 carbon atoms; and
R² and R³ are each independently a hydrogen atom or an alkyl radical having from 1 to 12 carbon atoms.
b) preparing an aqueous solution comprising a precursor of a metal ion and an organic compound capable of coordinating to metal io ns; and
c) mixing the aqueous microemulsion obtained in step a) and the aqueous solution obtained in step b), thus forming a precipitate.

9. The process according to claim 8, wherein the precursor of the metal ion is an inorganic salt, an oxide, a hydroxide, the salt of an inorganic oxygen-containing acid, an organic salt, optionally in the form of a hydrate or a mixture thereof or the metal in its elemental form.

10. The process according to any one of claims 8 and 9, wherein the organic compound capable of coordinating to metal ions is a heteroaromatic compound having at least two nitrogen atoms, wherein said heteroaromatic compound is unsubstituted or has one or more substituents independently selected from -C₁₋₆ alkyl, -NH₂, -NH(C₁₋₆ alkyl), -N(C₁₋₆ alkyl)₂, -OH, =O, -O-C₁₋₆ alkyl, halogen, cyano and nitro.

11. The process according to any one of claims 8 to 11, which further comprises the isolation of the precipitate obtained in step c).

12. The process according to claim 11, which further comprises subjecting the isolated precipitate to a heating process at a temperature ranging from 50 to 250°C during at least 1 hour, which may be assisted by vacuum.

13. A metal-organic framework material obtainable by the process as defined in any one of claims 8 to 11.

14. An ultraporous metal-organic framework material obtainable by the process as defined in claim 12.

15. Use of an ultraporous metal-organic framework material as defined in any of claims 3 to 5 and 15 as adsorbent, desiccant, flame retardant, storage material, gas purifier, selective capturer, drug delivery material, depot material for active substances or catalysts.
